Europäisches Patentamt

European Patent Office

Office européen des brevets

(11) Publication number: **0 418 902 A2**

# EUROPEAN PATENT APPLICATION

(21) Application number: 90118148.7

(51) Int. Cl.5: **H01J 61/44, C09K 11/80**

(22) Date of filing: 20.09.90

(30) Priority: 20.09.89 JP 241915/89

(43) Date of publication of application:
27.03.91 Bulletin 91/13

(84) Designated Contracting States:
DE FR GB IT NL

(71) Applicant: KASEI OPTONIX, LTD.
12-7, Shibadaimon 2-chome Minato-ku
Tokyo 105(JP)

(72) Inventor: Hisamune, Takayuki, c/o Kasei
Optonix Ltd.
1060 Naruda
Odawara-shi, Kanagawa(JP)
Inventor: Hase, Takashi, c/o Kasei Optonix
Ltd.
1060 Naruda
Odawara-shi, Kanagawa(JP)

(74) Representative: Wächtershäuser, Günter, Dr.
Tal 29
W-8000 München 2(DE)

(54) Fluorescent lamp, process for its production and phosphor used therefor.

(57) A process for producing a fluorescent lamp, which comprises coating on an inner wall of a glass tube having a diameter of from 18 to 29 mm a phosphor slurry comprising an europium-activated yttrium oxide red-emitting phosphor, a cerium- and terbium-activated lanthanum phosphate green-emitting phosphor and an europium-activated alkaline earth metal aluminate blue-emitting phosphor of the formula:

$(Ba_{1-x-y}Eu_xM_y)O \cdot a(Mg_{1-p}Zn_p)O \cdot bAl_2O_3$

wherein M is at least one member selected from the group consisting of Sr and Ca, and a, b, x, y and p are numbers within the following ranges:

$(16/9) < a \leq (1/4) b + 1,$

$(16/9) a + (16/9) \leq b \leq (3/2) a + 4$

$0.03 \leq x \leq 0.4,$

$0 \leq y \leq 0.4,$

$0.03 \leq x + y \leq 0.4,$

$0 \leq p \leq 0.3,$

in weight ratios within ranges of from 15 to 70% by weight of the red-emitting phosphor, from 20 to 65% by weight of the green-emitting phosphor and from 5 to 40% by weight of the blue-emitting phosphor, followed by drying and firing to form a fluorescent layer.

EP 0 418 902 A2

## FLUORESCENT LAMP, PROCESS FOR ITS PRODUCTION AND PHOSPHOR USED THEREFOR

The present invention relates to a three band fluorescent lamp, a process for its production and a phosphor useful therefor.

In recent years, three band fluorescent lamps have been developed in the field of common fluorescent lamps for illumination, and some of them have been practically employed. The phosphor to be used for lamps of this type is a mixture obtained by mixing three types of phosphors i.e. red-, green- and blue-emitting phosphors in suitable proportions.

Here, it is common to employ an europium-activated yttrium oxide phosphor ($Y_2O_3$:Eu; abbreviated by YOX) as the red-emitting phosphor and a cerium- and terbium-activated lanthanum phosphate phosphor ($LaPO_4$:Ce,Tb; abbreviated by LAP) as the green-emitting phosphor, particularly in Japan. As the blue-emitting phosphor, it is common to employ an europium-activated barium magnesium aluminate phosphor (BAM) or an alkaline earth metal chlorophosphate phosphor containing strontium as the main alkaline earth metal (SCA).

Such three band fluorescent lamps are known to undergo a color shifting phenomenon if the decrease in the optical outputs during the illumination of the lamps and the change in the emission colors are substantial with respect to the respective phosphors so that the balance of the optical outputs and the emittion colors among the phosphors is broken.

As the blue-emitting phosphor for such fluorescent lamps, a bivalent europium-activated aluminated phosphor [(Ba,Eu)O・2MgO・8Al$_2$O$_3$] (Japanese Examined Patent Publication No. 22836/1977) was frequently used by virtue of its high luminous efficiency, but it had a drawback that the change in the emittion color was substantial. As other bivalent europium-activated aluminated phosphors, $(Ba_{3-a-b}EU_aMI_b)$-$O_3$・$_x$MIIO・$_y$Al$_2$O$_3$ wherein MI is Sr, Ca, Pb, etc., and MII is Mg or Zn (Japanese Unexamined Patent Publication No. 25891/1986) or $(Ba_{1-a-b}Mg_aEu_b)O$・$_x$MIIIO$_2$・$_y$Al$_2$O$_3$, wherein MIII is Ti, Zr, Hf, etc. (Japanese Unexamined Patent Publication No. 96283/1989) are known, but they have the same drawback. Further, a bivalent europium- and bivalent manganese-activated aluminate phosphor (Japanese Examined Patent Publication No. 22836/1977) is also known. However, this is a phosphor having a manganese-activated green color as the main emission and emitting a bluish green color.

Therefore, this phosphor can not be employed as the blue-emitting component for the three band fluorescent lamp.

The above fluorescent lamps have a drawback that their optical outputs tend to decrease as time passes and their emittion colors are likely to change, thus leading to color shift.

In particular, a fluorescent lamp wherein BAM is employed as the blue-emitting phosphor, tends to have substantial color shift, although it is superior in the luminous flux to the one wherein SCA is employed. Under these circumstances, it has been proposed to use BAM and SCA in combination, but no adequate properties have been obtained.

It is an object of the present invention to solve the above problems and to provide a three band fluorescent lamp having minimum color shift.

It is another object of the present invention to overcome the above-mentioned drawbacks in the blue emitting phosphor for a three band fluorescent lamp and to provide a bivalent europium-activated aluminate phosphor having a minimum change in the emission color when the lamp is on.

The present invention provides a process for producing a fluorescent lamp, which comprises coating on an inner wall of a glass tube having a diameter of from 18 to 29 mm a phosphor slurry comprising an europium-activated yttrium oxide red-emitting phosphor, a cerium- and terbium-activated lanthanum phosphate green-emitting phosphor and an europium-activated alkaline earth metal aluminate blue-emitting phosphor of the formula:

$(Ba_{l-x-y}Eu_xM_y)O$・$a(Mg_{l-p}Zn_p)O$・$bAl_2O_3$

wherein M is at least one member selected from the group consisting of Sr and Ca, and a, b, x, y and p are numbers within the following ranges:

$(16/9) < a \leq (1/4) b + 1$,

$(16/9) a + (16/9) < b \leq (3/2) a + 4$

$0.03 \leq x \leq 0.4$,

$0 \leq y \leq 0.4$,

$0.03 \leq x + y \leq 0.4$,

$0 \leq p \leq 0.3$,

in weight ratios within ranges of from 15 to 70% by weight of the red-emitting phosphor, from 20 to 65% by weight of the green-emitting phosphor and from 5 to 40% by weight of the blue-emitting phosphor, followed by drying and firing to form a fluorescent layer.

The present invention also provides a three band fluorescent lamp having a fluorescent layer formed of a phosphor mixture comprising an europium-activated yttrium oxide red-emitting phosphor, a cerium- and terbium-activated lanthanum phosphate green-emitting phosphor and an europium-activated alkaline earth metal aluminate blue-emitting phosphor of the formula:

$$(Ba_{1-x-y}Eu_xM_y)O \cdot a(Mg_{1-p}Zn_p)O \cdot bAl_2O_3$$

wherein M, a, b, x, y and p are as defined above:

$(16/9) < a \leq (1/4) b + 1$,

$(16/9) a + (16/9) \leq b \leq (3/2) a + 4$

$0.03 \leq x \leq 0.4$,

$0 \leq y \leq 0.4$,

$0.03 \leq x + y \leq 0.4$,

$0 \leq p \leq 0.3$,

in weight ratios within ranges of from 15 to 70% of the red-emitting phosphor, from 20 to 65% by weight of the green-emitting phosphor and from 5 to 40% by weight of the blue-emitting phosphor.

The above red-emitting phosphor, the green-emitting phosphor and the blue-emitting phosphor are preferably adjusted to have average particle sizes of from 2.5 to 6 $\mu$m, from 2 to 5.5 $\mu$m and from 5.5 to 7.5 $\mu$m, respectively.

Further, the present invention provides an europium-activated alkaline earth metal aluminate phosphor of the formula:

$$(Ba_{1-x-y}Eu_xM^{II}_y)O \cdot a(Mg_{1-p}Zn_p)O \cdot bAl_2O_3$$

wherein $M^{II}$ is at least one element selected from the group consisting of Sr and Ca, and a, b, x, y and p are numbers within the following ranges:

$16/9 < a \leq (1/4) b + 1$,

$(16/9) a + 16/9 \leq b \leq (3/2) a + 4$

$0.03 \leq x \leq 0.4$,

$0 \leq y \leq 0.4$,

$0.03 \leq x + y \leq 0.4$,

$0 \leq p \leq 0.3$.

In the above formula, x, y and p are preferably $0.03 \leq x \leq 0.25$, $0 \leq y \leq 0.1$ and $0 \leq p \leq 0.05$, respectively.

By employing the above construction, the present invention is capable of presenting a three band fluorescent lamp having little color shift with time.

Further, by employing the above construction, the present invention is capable of presenting a blue-emitting phosphor exhibiting high emission luminance under excitation with an ultraviolet ray of 254 nm and little change in the emittion colors.

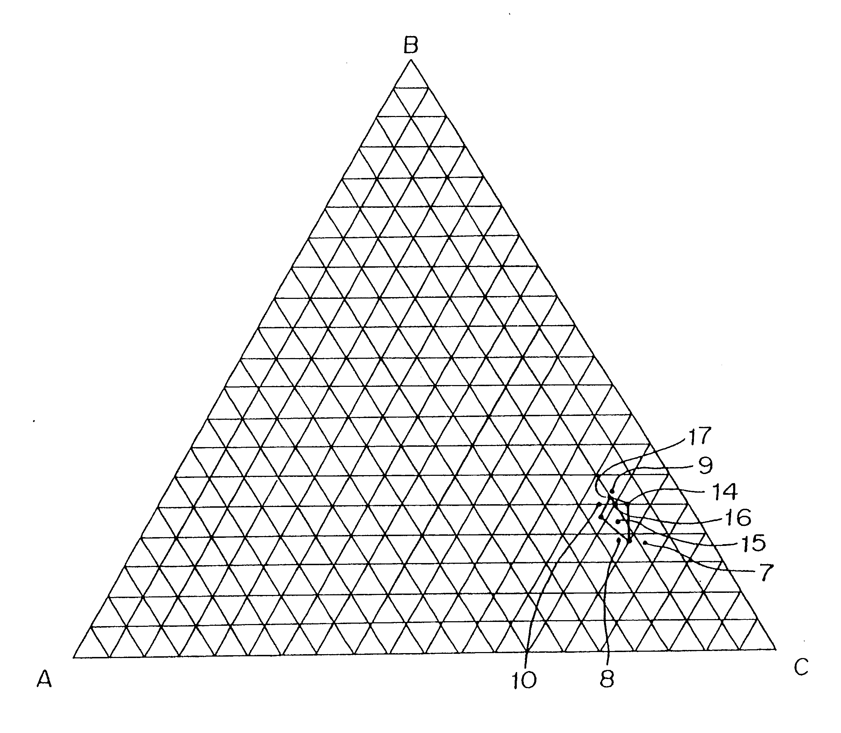

In the accompaning drawing, Figure 1 is a ternary constitution diagram wherein $(Ba_{1-x-y}Eu_xM^{II}_y)O$ is represented by oxide A, $(Mg_{1-p}Zn_p)O$ is represented by oxide B, and $Al_2O_3$ is represented by oxide C.

The present inventors have investigated the cause for color shift principally with respect to three band fluorescent lamps wherein a BAM phosphor is employed which is excellent in the luminous flux as the blue-emitting phosphor, and have found:

(1) The color balance is likely to be broken because the deterioration rate of the quantum efficiency of the blue-emitting phosphor is large as compared with two types of other phosphors;

(2) The emittion color of the blue-emitting phosphor itself changes with time; and

(3) Mercury in the fluorescent lamp is absorbed by a phosphor having a small particle size, particularly by a blue-emitting phosphor having a small particle size and is converted to mercury oxide which absorbs blue color light.

Further, it had been found that the color shift of the BAM phosphor is primarily due to the cause of item (2) among these.

From a further study, it has been found that only an europium-activated alkaline earth aluminate phosphor having a very limited composition shows a minimum change in the emission color of the phosphor itself with respect to item (2). The above object has been accomplished by using this blue-emitting phosphor together with a (YOX) red-emitting phosphor and a (LAP) green-emitting phosphor in a limited mixing ratio.

Figure 1 shows the ternary constitution diagram of an europium-activated alkaline earth metal aluminated phosphor. Here, oxide A represents $(Ba_{1-x-y}Eu_xM_y)O$ and is the one wherein a part of Ba is replaced by an activator Eu and M representing Sr or Ca. It is necessary to maintain the emission color by adjustment such that at least 60 mol% in oxide A is constituted by BaO. Further, it is necessary to secure the emission luminance by adjustment such that at least 3 mol% in oxide A is constituted by EuO. If EuO exceeds 40 mol%, it tends to be difficult to obtain an improvement of the emission luminance. From the economical viewpoint, it is preferably at most 25 mol%. Namely, $0.03 \leq x \leq 0.4$, and $0.03 \leq x + y \leq 0.4$, particularly preferably $0.03 \leq x \leq 0.25$, and $0 \leq y \leq 0.1$.

Oxide B represents $(Mg_{1-p}Zn_p)O$ and is the one wherein a part of Mg is replaced by Zn. It is necessary to secure the emission luminance by adjustment such that at least 70 mol% of oxide B is constituted by MgO. Namely, $0 \leq p \leq 0.3$, particularly $0 \leq p \leq 0.05$, is preferred.

Optionally a little amount of Mg can be substituted by Mn as a co-activator.

Oxide C represents $Al_2O_3$.

When oxide A is 1 mol, it is possible to prevent a color shift phenomenon of the emittion color due to the above item (2), by maintaining the following relations:

$(16/9) < a \leq (1/4) b + 1$

$(16/9) a + 16/9 \leq b \leq (3/2) a + 4$

where a is the molar amount of oxide B and b is the molar amount of oxide C.

This europium-activated alkaline earth metal aluminate phosphor has the main emission wavelength within a range of from 440 to 460 nm. To from 5 to 40% by weight of this blue-emitting phosphor, from 30 to 65% by weight of LAP green-emitting phosphor having the main emission wavelength within a range of from 540 to 550 nm and from 15 to 70% by weight of YOX red-emitting phosphor having the main emission wavelength within a range of sfrom 605 to 615 nm are blended to obtain a phosphor mixture. This phosphor mixture is coated on the inner wall of a glass tube to form a fluorescent layer, whereby it is possible to obtain a three band fluorescent lamp having a small possibility of color shift with time.

Further, it is possible to control the cause (3) for the color shift by adjusting the average particles sizes of the red-emitting phosphor, the green-emitting phosphor and the blue-emitting phosphor within ranges of from 2.5 to 6 $\mu$m, from 2 to 5.5 $\mu$m and from 5.5 to 7.5 $\mu$m, respectively.

The degree of color shift is represented by the following equation:

$$ds = \{(x_f-x_i)^2 + (y_f-y_i)^2\}^{1/2}$$

where the emission color during the initial stage (100 hours after illumination) of the fluorescent lamp is represented by $(x_i, y_i)$ on the CIE standard chromaticity diagram, and the emission color after illumination for 1,000 hours is represented by $(x_f, y_f)$. The smaller the value of ds, the smaller the color shift.

The phosphor of the present invention can be prepared as follows:

As raw materials for the phosphor, predetermined amounts of (1) a barium compound such as barium oxide, barium hydroxide or barium carbonate, (2) a magnesium compound such as magnesium oxide, magnesium hydroxide or basic magnesium carbonate, (3) a strontium compound such as strontium oxide, strontium hydroxide or strontium carbonate, (4) a calcium compound such as calcium oxide, calcium hydroxide or calcium carbonate, (5) a zinc compound such as zinc oxide, zinc hydroxide or basic zinc carbonate, (6) an aluminum compound such as aluminum oxide or aluminum hydroxide, (7) an europium compound such as europium oxide or europium fluoride, and (8) optionally a manganese compound such as manganese oxide, manganese hydroxide or manganese carbonate, are weighed, and a flux such as barium fluoride, magnesium fluoride or aluminum fluoride is incorporated thereto. Then, the raw material mixture is thoroughly mixed. This mixture is filled in a heat resistant container such as a crucible and fired at a temperature of from 1,200 to 1,500°C. The fired product thus obtained is pulverized and mixed, and again filled in a heat resistant container and fired in a weakly reducing atmosphere at a temperature of from 1,200 to 1,500°C for from 2 to 5 hours. This fired product is pulverized, washed with water, dried and sieved to obtain a blue-emitting aluminate phosphor of the present invention.

In the present invention, a phosphor slurry comprising the above-mentioned red-emitting phosphor, the green-emitting phosphor and the blue-emitting phosphor of the present invention in weight ratios within ranges of from 15 to 70% by weight of the red-emitting phosphor, sfrom 20 to 65% by weight of the green-emitting phosphor and from 5 to 40% by weight of the blue-emitting phosphor, is prepared. This slurry is coated on the inner wall of a glass tube, then dried and fired to form a fluorescent layer, and a fluorescent lamp is prepared in a well known method. Here, the glass tube preferably has a tubular diameter within a range of from 18 to 29 mm. It is advisable to coat the phosphor slurry in an amount within a range of from 1 to 6.5 mg/cm$^2$.

Now, the present invention will be described in further detail with reference to Examples. However, it should be understood that the present invention is by no means restricted to such specific Examples.

EXAMPLES 1 TO 6

$(Ba_{l-x-y}Eu_xM_y)O \cdot a(Mg_{l-p}Zn_p)O \cdot bAl_2O_3$ blue-emitting phosphor, $LaPO_4$:Ce,Tb green-emitting phosphor and $Y_2O_3$:Eu red-emitting phosphor were mixed in the proportions as identified in Table 1, and the mixture was added to a butyl acetate solution of nitrocellulose to obtain a phosphor slurry. The phosphor slurry was coated on the inner wall of a glass tube to obtain a straight tubular slim line fluorescent lamp FSL64T6. The composition of the blue-emitting phosphor was as shown in Table 1. Then, the emission colors upon expiration of 100 hours and 1,000 hours after illumination were measured to obtain color shift ds.

On the other hand, a lamp was prepared in a similar manner by using a phosphor wherein the value for a or b in the composition of the blue-emitting phosphor is outside the scope of the present invention, and the emission colors were measured as a Comparative Example.

The results are shown in Table 1. As is apparent from Table 1, with lamps wherein blue-emitting phosphors of the present invention were employed, the color shift was substantially smaller than the lamps of the Comparative Examples.

Table 1

| | Blue-emitting phosphor | Proportions of phosphors (%) | | | Chromaticity after 100 hrs | | Chromaticity after 100 hrs | | Color shift |
|---|---|---|---|---|---|---|---|---|---|
| | | Blue | Green | Red | $x_i$ | $y_i$ | $x_f$ | $y_f$ | ds |
| Example 1 | $(Ba_{0.88}Eu_{0.12})O \cdot 3.0MgO \cdot 8.5Al_2O_3$ | 20 | 40 | 40 | 0.3484 | 0.3676 | 0.3516 | 0.3702 | 0.0041 |
| Example 2 | $(Ba_{0.90}Eu_{0.10})O \cdot 2.0MgO \cdot 6.0Al_2O_3$ | 20 | 40 | 40 | 0.3461 | 0.3647 | 0.3483 | 0.3656 | 0.0023 |
| Example 3 | $(Ba_{0.90}Eu_{0.10})O \cdot 2.5MgO \cdot 6.5Al_2O_3$ | 20 | 40 | 40 | 0.3471 | 0.3662 | 0.3494 | 0.3705 | 0.0049 |
| Example 4 | $(Ba_{0.90}Eu_{0.10})O \cdot 2.6MgO \cdot 6.4Al_2O_3$ | 20 | 40 | 40 | 0.3338 | 0.3462 | 0.3360 | 0.3490 | 0.0036 |
| Example 5 | $(Ba_{0.90}Eu_{0.10})O \cdot 2.0MgO \cdot 6.0Al_2O_3$ | 30 | 40 | 30 | 0.3203 | 0.3423 | 0.3224 | 0.3444 | 0.0030 |
| Example 6 | $(Ba_{0.90}Eu_{0.10})O \cdot 2.0MgO \cdot 6.0Al_2O_3$ | 10 | 25 | 65 | 0.4495 | 0.4013 | 0.4501 | 0.4021 | 0.0010 |
| Comparative Example 1 | $(Ba_{0.90}Eu_{0.10})O \cdot 2.0MgO \cdot 8.0Al_2O_3$ | 20 | 40 | 40 | 0.3433 | 0.3590 | 0.3486 | 0.3663 | 0.0090 |
| Comparative Example 2 | $(Ba_{0.90}Eu_{0.10})O \cdot 1.5MgO \cdot 5.5Al_2O_3$ | 20 | 40 | 40 | 0.3470 | 0.3670 | 0.3518 | 0.3721 | 0.0070 |
| Comparative Example 3 | $(Ba_{0.90}Eu_{0.10})O \cdot 3.0MgO \cdot 7.0Al_2O_3$ | 20 | 40 | 40 | 0.3456 | 0.3641 | 0.3499 | 0.3688 | 0.0064 |
| Comparative Example 4 | $(Ba_{0.90}Eu_{0.10})O \cdot 2.0MgO \cdot 5.0Al_2O_3$ | 20 | 40 | 40 | 0.3463 | 0.3700 | 0.3516 | 0.3762 | 0.0082 |

EXAMPLES 7 TO 13

$(Ba_{1-x-y}Eu_xM_y)O \cdot a(Mg_{1-p}Zn_p)O \cdot bAl_2O_3$ blue-emitting phosphor having a predetermined amount of manganese incorporated as coactivator, $LaPO_4$:Ce,Tb green-emitting phosphor and $Y_2O_3$:Eu red-emitting phosphor were mixed in the proportions as identified in Table 2, and the mixture was added to a butyl acetate solution of nitrocellulose to obtain a phosphor slurry. The phosphor slurry was coated on the inner wall of a glass tube to obtain a straight tubular slim line fluorescent lamp FSL64T6. The composition of the blue-emitting phosphor was as shown in Table 2. Then, the emission colors upon expiration of 100 hours and 1,000 hours from lighting were measured to determine the color shift ds.

On the other hand, a lamp was prepared in the same manner by using a phosphor wherein the value for a or b in the composition of the blue-emitting phosphor was outside the scope of the present invention and no manganese was contained, and the emission colors were measured as a Comparative Example.

The results are shown in Table 2. As is apparent from Table 2, with lamps wherein blue-emitting phosphors of the present invention were employed, the color drift was substantially smaller than the lamps of the Comparative Examples.

Table 2

| | Blue-emitting phosphor | Proportions of phosphors (%) | | | Chromaticity after 100 hrs | | Chromaticity after 100 hrs | | Color shift |
|---|---|---|---|---|---|---|---|---|---|
| | | Blue | Green | Red | $x_i$ | $y_i$ | $x_f$ | $y_f$ | ds |
| Example 7 | $Ba_{0.9} \cdot Eu_{0.1} \cdot Mg_{1.996}Mn_{0.004}Al_{12}O_{21}$ | 16 | 42 | 42 | 0.3452 | 0.3658 | 0.3462 | 0.3673 | 0.0018 |
| Example 8 | $Ba_{0.9} \cdot Eu_{0.1} \cdot Mg_{2.496}Mn_{0.004}Al_{12}O_{23}$ | 16 | 42 | 42 | 0.3338 | 0.3462 | 0.3350 | 0.3477 | 0.0019 |
| Example 9 | $Ba_{0.9} \cdot Eu_{0.1} \cdot Mg_{1.999}Mn_{0.001}Al_{12}O_{21}$ | 16 | 42 | 42 | 0.3451 | 0.3647 | 0.3463 | 0.3673 | 0.0029 |
| Example 10 | $Ba_{0.9} \cdot Eu_{0.1} \cdot Mg_{1.998}Mn_{0.002}Al_{12}O_{21}$ | 16 | 42 | 42 | 0.3441 | 0.3624 | 0.3452 | 0.3637 | 0.0017 |
| Example 11 | $Ba_{0.9} \cdot Eu_{0.1} \cdot Mg_{1.98}Mn_{0.02}Al_{12}O_{21}$ | 20 | 40 | 40 | 0.3473 | 0.3505 | 0.3498 | 0.3522 | 0.0030 |
| Example 12 | $Ba_{0.9} \cdot Eu_{0.1} \cdot Mg_{1.998}Mn_{0.002}Al_{12}O_{21}$ | 30 | 40 | 30 | 0.3433 | 0.3488 | 0.3455 | 0.3517 | 0.0036 |
| Example 13 | $Ba_{0.9} \cdot Eu_{0.1} \cdot Mg_{1.998}Mn_{0.002}Al_{12}O_{21}$ | 10 | 25 | 65 | 0.4486 | 0.4063 | 0.4491 | 0.4077 | 0.0015 |
| Comparative Example 5 | $Ba_{0.9} \cdot Eu_{0.1} \cdot Mg_{1.5}Al_{11}O_{19}$ | 20 | 40 | 40 | 0.3470 | 0.3670 | 0.3518 | 0.3721 | 0.0070 |
| Comparative Example 6 | $Ba_{0.9} \cdot Eu_{0.1} \cdot Mg_2Al_{16}O_{27}$ | 20 | 40 | 40 | 0.3433 | 0.3590 | 0.3486 | 0.3633 | 0.0090 |

EP 0 418 902 A2

EXAMPLE 14

| BaCO$_3$ | 0.88 mol |
|----------|----------|
| MgO | 3.0 mol |
| Eu$_2$O$_3$ | 0.06 mol |
| Al$_2$O$_3$ | 8.5 mol |
| AlF$_3$ | 0.01 mol |

The above raw material was thoroughly mixed and fired in air at 1,350° C for 3 hours. The fired product was pulverized, washed with water, dried and sieved to obtain a phosphor. The composition of this phosphor was (Ba$_{0.88}$Eu$_{0.12}$)O·3.0MgO·Al$_2$O$_3$ and is the one shown by reference numeral 14 in the three component state diagram in Figure 1.

This phosphor was coated on the inner wall of a glass tube to obtain a FSL64T6 lamp. After using this lamp for 1,000 hours, the phosphor was peeled off and illuminated under excitation by ultraviolet rays of 254 nm together with the phosphor before use, whereby the phosphor after use showed x = 0.146 and y = 0.065, while the phosphor before use showed x = 0.146 and y = 0.060. Thus, the change in the emission color was very small at a level of Δx = 0.000 and Δy = 0.005.

EXAMPLE 15

| BaCO$_3$ | 0.90 mol |
|----------|----------|
| MgO | 2.0 mol |
| Eu$_2$O$_3$ | 0.05 mol |
| Al$_2$O$_3$ | 6.0 mol |
| AlF$_3$ | 0.01 mol |

Using the above raw material, a phosphor was prepared under the same conditions as in Example 14. The composition of the phosphor thus obtained was (Ba$_{0.9}$Eu$_{0.1}$)O·2MgO·6Al$_2$O$_3$ and was the one shown by reference numeral 15 in the ternary constitution diagram in Figure 1.

With respect to this phosphor, the emission color was measured in the same manner as in Example 14, whereby the phosphor after use showed x = 0.146 and y = 0.059, while the phosphor before use showed x = 0.146 and y = 0.056. Thus, the change in the emission color was very small at a level of Δx = 0.000 and Δy = 0.003.

EXAMPLES 16 TO 19

Phosphors having the compositions as identified in Table 3 were prepared under the same conditions as in Examples 14 and 15. Reference numerals 16 to 19 in the ternary constitution diagram in Figure 1 represent Examples 16 to 19, respectively, and indicate the compositions of the phosphors obtained in the respective Examples. Examples 18 and 19 represent the cases wherein a part of Ba of the phosphor of Example 15 was substituted by Sr or Ca.

With respect to these phosphors, the emission colors were measured in the same manner as in Examples 14 and 15, and the results are also shown in Table 3. As is apparent from Table 3, the phosphors of all the Examples showed small changes in the emission colors. Also with the partially substituted phosphors, the same results as with the phosphors before substitution were obtained. Thus, these phosphors were found to be useful as blue-emitting phosphors for three band fluorescent lamps.

9

COMPARATIVE EXAMPLES 7 TO 10

Phosphors having the compositions as identified in Table 3 were prepared under the same conditions as in Examples 14 and 15. Reference numerals 7 to 10 in the ternary constitution diagram in Figure 1 represent Comparative Examples 7 to 10, respectively, and indicate the compositions of the phosphors obtained in the respective Comparative Examples.

Also with respect to these phosphors, the emission colors were measured in the same manner as in Examples 14 and 15, and the results are shown also in Table 3. As is apparent from Table 3, with the phosphors of these Comparative Examples, the change in the emission colors is relatively large, whereby color shift is expected to be relatively large when they are used for three band fluorescent lamps.

Table 3

| | Composition of phosphor | Emittion color before use | | After 1,000 hrs | | Change in emittion color | |
|---|---|---|---|---|---|---|---|
| | | x | y | $x'$ | $y'$ | $\Delta x$ | $\Delta y$ |
| Example 14 | $(Ba_{0.88}Eu_{0.12})O \cdot 3.0MgO \cdot 8.5Al_2O_3$ | 0.146 | 0.060 | 0.146 | 0.065 | 0.000 | 0.005 |
| Example 15 | $(Ba_{0.90}Eu_{0.10})O \cdot 2.0MgO \cdot 6.0Al_2O_3$ | 0.146 | 0.056 | 0.146 | 0.059 | 0.000 | 0.003 |
| Example 16 | $(Ba_{0.90}Eu_{0.10})O \cdot 2.5MgO \cdot 6.5Al_2O_3$ | 0.146 | 0.056 | 0.146 | 0.061 | 0.000 | 0.005 |
| Example 17 | $(Ba_{0.90}Eu_{0.10})O \cdot 2.6MgO \cdot 6.4Al_2O_3$ | 0.146 | 0.058 | 0.146 | 0.064 | 0.000 | 0.006 |
| Example 18 | $(Ba_{0.81}Sr_{0.09}Eu_{0.10})O \cdot 2.0MgO \cdot 6.0Al_2O_3$ | 0.144 | 0.072 | 0.144 | 0.075 | 0.000 | 0.003 |
| Example 19 | $(Ba_{0.71}Ca_{0.19}Eu_{0.10})O \cdot 2.0MgO \cdot 6.0Al_2O_3$ | 0.143 | 0.078 | 0.145 | 0.084 | 0.002 | 0.006 |
| Comparative Example 7 | $(Ba_{0.90}Eu_{0.10})O \cdot 2.0MgO \cdot 8.0Al_2O_3$ | 0.144 | 0.067 | 0.152 | 0.082 | 0.008 | 0.015 |
| Comparative Example 8 | $(Ba_{0.90}Eu_{0.10})O \cdot 1.5MgO \cdot 5.5Al_2O_3$ | 0.146 | 0.062 | 0.152 | 0.075 | 0.006 | 0.013 |
| Comparative Example 9 | $(Ba_{0.90}Eu_{0.10})O \cdot 3.0MgO \cdot 7.0Al_2O_3$ | 0.148 | 0.062 | 0.153 | 0.074 | 0.005 | 0.012 |
| Comparative Example 10 | $(Ba_{0.90}Eu_{0.10})O \cdot 2.0MgO \cdot 5.0Al_2O_3$ | 0.146 | 0.056 | 0.151 | 0.070 | 0.005 | 0.014 |

EXAMPLE 20

| | |
|---|---|
| $BaCO_3$ | 0.90 mol |
| $MgO$ | 1.996 mol |
| $Eu_2O_3$ | 0.05 mol |
| $MnO_2$ | 0.004 mol |
| $Al_2O_3$ | 6.0 mol |
| $AlF_3$ | 0.02 mol |

The above raw material was thoroughly mixed and fired in air at 1,350°C for 3 hours. The fired product was pulverized, then fired in a weakly reducing atmosphere at 1,350°C for 3 hours, followed by pulverization, washing with water, drying and sieving to obtain a phosphor. This phosphor had a composition of $(Ba_{0.90}Eu_{0.10})O \cdot 2(Mg_{0.998}Mn_{0.002})O \cdot 6Al_2O_3$, wherein Mn/Eu was 0.04.

This phosphor was coated on the inner wall of a glass tube to obtain a FSL64T6 lamp. After using the lamp for 1,000 hours, the phosphor was peeled off from the lamp and illuminated under excitation by ultraviolet rays of 254 nm together with the phosphor before use, whereby the emission color was measured. The phosphor after use showed x = 0.146 and y = 0.081, while the phosphor before use

10

showed x = 0.146 and y = 0.079. Thus, the change in the emission color was small at a level of $\Delta x$ = 0.000 and $\Delta y$ = 0.002.

## EXAMPLES 21 TO 27

Phosphors having the compositions as identified in Table 4 were prepared under the same conditions as in Example 20.

With respect to these phosphors, the emission colors were measured in the same manner as in Example 20, and the results are also shown in Table 4. As is apparent from Table 4, the change in the emission color was small with the phosphor of each Example. Thus, these phosphors were found to be blue-emitting phosphors useful for three band fluorescent lamps.

## COMPARATIVE EXAMPLES 11 TO 13

Phosphors having the compositions as identified in Table 4 were prepared under the same conditions as in Examples 20 to 27.

Also with respect to these phosphors, the emission colors were measured in the same manner as in Example 20. The results are also shown in Table 4.

As is apparent from Table 4, the change in the emission color is relatively large, whereby color shift is expected when they are used for three band fluorescent lamps. The phosphor of Comparative Example 13 is a conventional phosphor having a composition of $(Ba_{0.9}Eu_{0.1})O \cdot (Mg_{1.8}Mn_{0.2})O_{2.0} \cdot 8.0Al_2O_3$ and activated by Eu and Mn, and it is a bluish green-emitting phosphor having a large peak in the vicinity of 515 nm rather than at 450 nm and therefore can not be used for a three band fluorescent lamp.

Table 4

| | Composition of phosphor | Mn/Eu | Emittion color before use | | After 1,000 hrs | | Change in emittion color | |
|---|---|---|---|---|---|---|---|---|
| | | | x | y | $x'$ | $y'$ | $\Delta x$ | $\Delta y$ |
| Example 20 | $Ba_{0.9}Eu_{0.1}Mg_{1.996}Mn_{0.004}Al_{12}O_{21}$ | 0.04 | 0.146 | 0.079 | 0.146 | 0.081 | 0.000 | 0.002 |
| Example 21 | $Ba_{0.9}Eu_{0.1}Mg_{2.496}Mn_{0.004}Al_{13}O_{23}$ | 0.04 | 0.146 | 0.077 | 0.146 | 0.080 | 0.000 | 0.003 |
| Example 22 | $Ba_{0.9}Eu_{0.1}Mg_{1.999}Mn_{0.001}Al_{12}O_{21}$ | 0.01 | 0.146 | 0.060 | 0.148 | 0.065 | 0.002 | 0.005 |
| Example 23 | $Ba_{0.8}Eu_{0.2}Mg_{1.998}Mn_{0.002}Al_{12}O_{21}$ | 0.01 | 0.147 | 0.067 | 0.148 | 0.072 | 0.001 | 0.005 |
| Example 24 | $Ba_{0.8}Eu_{0.2}Mg_{1.996}Mn_{0.004}Al_{12}O_{21}$ | 0.02 | 0.147 | 0.073 | 0.148 | 0.075 | 0.001 | 0.002 |
| Example 25 | $Ba_{0.89}Eu_{0.11}Mg_{2.21}Mn_{0.011}Al_{13.3}O_{23.171}$ | 0.1 | 0.147 | 0.089 | 0.146 | 0.089 | 0.001 | 0.000 |
| Example 26 | $Ba_{0.89}Eu_{0.11}Mg_{2.2}Mn_{0.022}Al_{13.3}O_{23.172}$ | 0.2 | 0.147 | 0.115 | 0.148 | 0.112 | 0.001 | 0.003 |
| Example 27 | $Ba_{0.8}Sr_{0.1}Eu_{0.1}Mg_{1.996}Mn_{0.004}Al_{12}O_{21}$ | 0.04 | 0.145 | 0.080 | 0.146 | 0.083 | 0.001 | 0.003 |
| Comparative Example 11 | $Ba_{0.9}Eu_{0.1}Mg_{1.5}Al_{11}O_{19}$ | 0 | 0.146 | 0.062 | 0.152 | 0.075 | 0.006 | 0.013 |
| Comparative Example 12 | $Ba_{0.9}Eu_{0.1}Mg_{2.0}Al_{16}O_{27}$ | 0 | 0.144 | 0.067 | 0.152 | 0.082 | 0.008 | 0.015 |
| Comparative Example 13 | $Ba_{0.9}Eu_{0.1}Mg_{1.8}Mn_{0.2}Al_{16}O_{27}$ | 2.0 | 0.142 | 0.32 | - | - | - | - |

**Claims**

1. A process for producing a fluorescent lamp, which comprises coating on an inner wall of a glass tube having a diameter of from 18 to 29 mm a phosphor slurry scomprising an europium-activated yttrium oxide red-emitting phosphor, a cerium- and terbium-activated lanthanum phosphate green-emitting phosphor and an europium-activated alkaline earth metal aluminate blue-emitting phosphor of the formula:

$(Ba_{1-x-y}Eu_xM_y)O \cdot a(Mg_{1-p}Zn_p)O \cdot bAl_2O_3$

wherein M is at least one member selected from the group consisting of Sr and Ca, and a, b, x, y and p are numbers within the following ranges:

$(16/9) < a \leq (1/4) b + 1$,

$(16/9) a + (16/9) \leq b \leq (3/2) a + 4$

$0.03 \leq x \leq 0.4$,

$0 \leq y \leq 0.4$,

$0.03 \leq x + y \leq 0.4$,

$0 \leq p \leq 0.3$,

in weight ratios within ranges of from 15 to 70% by weight of the red-emitting phosphor, from 20 to 65% by weight of the green-emitting phosphor and from 5 to 40% by weight of the blue-emitting phosphor, followed by drying and firing to form a fluorescent layer.

2. A three band fluorescent lamp having a fluorescent layer formed of a phosphor mixture comprising an europium-activated yttrium oxide red-emitting phosphor, a cerium- and terbium-activated lanthanum phosphate green-emitting phosphor and an europium-activated alkaline earth metal aluminate blue-emitting phosphor of the formula:

$(Ba_{1-x-y}Eu_xM_y)O \cdot a(Mg_{1-p}Zn_p)O \cdot bAl_2O_3$

wherein M is at least one element selected from the group consisting of Sr and Ca, and a, b, x, y and p are numbers within the following ranges:

$(16/9) < a \leq (1/4) b + 1$,

$(16/9) a + (16/9) \leq b \leq (3/2) a + 4$

$0.03 \leq x \leq 0.4$,

$0 \leq y \leq 0.4$,

$0.03 \leq x + y \leq 0.4$,

$0 \leq p \leq 0.3$,

in weight ratios within ranges of from 15 to 70% of the red-emitting phosphor, from 20 to 65% by weight of the green-emitting phosphor and from 5 to 40% by weight of the blue-emitting phosphor.

3. The fluorescent lamp according to Claim 2, wherein the average particle sizes of the red-emitting phosphor, the green-emitting phosphor and the blue-emitting phosphor are adjusted within ranges of from 2.5 to 6 $\mu$m, from 2 to 5.5 $\mu$m and from 5.5 to 7.5 $\mu$m, respectively.

4. The fluorescent lamp according to Claim 2, wherein the tubular diameter of the fluorescent lamp is within a range of from 18 to 29 mm.

5. An europium-activated alkaline earth metal aluminate phosphor of the formula:

$(Ba_{1-x-y}Eu_xM^{II}_y)O \cdot a(Mg_{1-p}Zn_p)O \cdot bAl_2O_3$

wherein $M^{II}$ is at least one element selected from the group consisting of Sr and Ca, and a, b, x, y and p are numbers within the following ranges:

$16/9 < a \leq (1/4) b + 1$,

$(16/9) a + 16/9 \leq b \leq (3/2) a + 4$

$0.03 \leq x \leq 0.4$,

$0 \leq y \leq 0.4$,

$0.03 \leq x + y \leq 0.4$,

$0 \leq p \leq 0.3$.

6. The europium-activated alkaline earth metal aluminate phosphor according to Claim 5, which contains manganese as .

7. The europium-activated alkaline earth metal aluminate phosphor according to Claim 5, wherein the amount of manganese is within a range of from 0.005 to 0.2 x/a.

8. The europium-activated alkaline earth metal aluminate phosphor according to Claim 7, wherein the amount of manganese is within a range of from 0.01 to 0.1 x/a.

9. The europium-activated alkaline earth metal aluminate phosphor according to Claim 5, wherein the particle size of the phosphor is within a range of from 5.5 to 7.5 mm.